# EUROPÄISCHE PATENTSCHRIFT

(11) **EP 2 105 351 B1**
(45) Veröffentlichungstag und Bekanntmachung des Hinweises auf die Patenterteilung: **06.07.2011**
(21) Anmeldenummer: 09003849.8
(22) Anmeldetag: 18.03.2009
(51) Int. Cl.: B60R 5/00

(54) **Durchladeeinrichtung für Kraftfahrzeugsitze**
Through loading device for motor vehicle seats
Dispositif à évidement de chargement pour sièges de véhicules automobiles

(30) Priorität: 26.03.2008 DE 102008015608
(43) Veröffentlichungstag der Anmeldung: 30.09.2009
(73) Patentinhaber: EuWe Eugen Wexler GmbH, 91207 Lauf (DE)
(72) Erfinder: Pfister, Stefan, 91220 Schnaittach (DE); Huber, Peter, 91207 Lauf (DE)
(74) Vertreter: Hübner, Gerd

(56) Entgegenhaltungen:
- DE-C1- 19 800 104
- DE-U1- 9 417 440

## Beschreibung

Die Erfindung betrifft eine Durchladeeinrichtung für Kraftfahrzeugsitze, insbesondere für Kfz-Rückbänke, mit den im Oberbegriff des Patentanspruches 1 angegebenen Merkmalen.

Derartige Durchladeeinrichtungen werden üblicherweise in Verbindung mit einer flexiblen Schutzhülle - ein in der Regel so bezeichneter "Skisack" - dazu verwendet, den Transport sperriger, langgestreckter Gegenstände, wie beispielsweise von Skiern, Snowboards oder auch Golftaschen, mit möglichst geringer Beeinträchtigung der Sitzplatzkapazität eines Pkws zu ermöglichen. Dazu wird - wie beispielsweise aus der DE 39 01 354 C2 oder dem DE 94 17 440 U1 bekannt ist - hinter einem Durchlass im Bereich der Sitzlehne ein Durchladerahmen positioniert, der zwischen einer in einem Fach im Innenraumboden des Kraftfahrzeuges verwahrten Ruhestellung und einer vor dem Durchlass hochgeschwenkten Betriebsstellung verstellbar ist.

Üblicherweise handelt es sich bei dem Durchlass im Bereich der Sitzlehne zum Einen beispielsweise um ein nach vorne aus der Rückenlehne ausklappbares Mittelarmlehnenteil, das einen zentralen Durchlass im Bereich der Rücksitzbank zu Verfügung stellt. Moderne Pkw mit variabel teilbaren Rückenlehnen der hinteren Sitzbank gestatten darüber hinaus vielfach auch das Umlegen einer oder beider Lehnenteile hinter dem Fahrer- und Beifahrersitz, so dass der damit zur Verfügung stehende Durchlass nicht zentral, sondern aus der Mitte verschoben angeordnet ist.

Bei den bekannten Durchladeeinrichtungen kann diesem Umstand keine Rechnung gezollt werden, da sie in aller Regel bezogen auf die FahrzeugQuerrichtung nur eine einzige Position in Fahrzeugmitte vorsehen. Insoweit ist die Durchladeeinrichtung mit ihrem Skisack nicht oder nur eingeschränkt nutzbar, wenn auf der Rücksitzbank zwei Personen auf dem rechten und mittleren Sitzplatz der Bank befördert werden sollen, wohingegen das Rückenlehnenteil des linken Sitzplatzes nach vorne zum Einladen von Skiern umgeklappt wird. In diesem Falle ist die Durchladeeinrichtung mit ihrem vorhandenen Skisack kaum nutzbar und die Skier müssen gesondert verpackt werden, sofern nicht ein Verschmutzen und Befeuchten des Fahrzeuginnenraumes durch Schneereste auf den Skiern in Kauf genommen werden.

Die DE 603 00 029 T2 zeigt eine Durchladeeinrichtung für die Sitzlehne eines Kraftfahrzeuges mit einem in Querrichtung verschiebbaren Wandteil, mit dem die Durchladeöffnung verschlossen und geöffnet werden kann.

Ausgehend von der geschilderten Problematik liegt der Erfindung die Aufgabe zugrunde, eine Durchladeeinrichtung der gattungsgemäßen Art so weiterzubilden, dass diese flexibel an die jeweiligen Gegebenheiten der Sitzplatzverteilung und Durchlassanordnung anpassbar ist.

Diese Aufgabe wird laut Kennzeichnungsteil des Anspruches 1 dadurch gelöst, dass der Durchladerahmen zumindest in der Betriebsstellung der Durchladeeinrichtung in Querrichtung verschiebbar gelagert ist. Damit kann die Position des Durchladerahmens beispielsweise nach links verlagert werden, so dass der Rahmen mit seinem vollen freien Querschnitt im Bereich des umgeklappten linken Rückenlehnenteils zum Stehen kommt. Damit ist der volle freie Querschnitt des Rahmens für ein Durchladen von Gegenständen verfügbar. Wird beispielsweise lediglich ein schmales zentrales Lehnenteil nach vorne umgeklappt, so kann auch dahinter der Durchladerahmen positioniert werden, so dass Skier in der Fahrzeugmitte von hinten in den Skisack eingeschoben werden können.

Zu dem vorstehend angesprochenen Skisack als flexible Schutzhülle ist darauf hinzuweisen, dass dieser nicht zwingend zur Durchladeeinrichtung gehören muss, letztere kann auch lediglich in Form des Durchladerahmens als Ladebegrenzung und Ladegutsicherung eingesetzt werden. Sofern ein Skisack verwendet wird, kann dieser dann über einen gesonderten Fixierrahmen im Bereich seiner Öffnung an den Durchladerahmen angekoppelt werden.

Die weiteren abhängigen Ansprüche betreffen bevorzugte Ausführungformen im Wesentlichen bezüglich der für den Durchladerahmen vorgesehenen Aufstellmechanik und die Verwahrung der Durchladeeinrichtung in ihrer Ruheposition im Fahrzeugboden. Nähere Ausführungen, Einzelheiten und Vorteile hierzu sind zur Vermeidung von Wiederholungen der nachfolgenden Beschreibung von Ausführungsbeispielen entnehmbar. Es zeigen:
- Fig. 1 bis 3: schematische Rückansichten der Durchladeeinrichtung in ihrer Betriebsstellung in drei unterschiedlichen Quer- positionen,
- Fig. 4: eine Draufsicht auf die Durchladeeinrichtung in ihrer Ruhestellung,
- Fig. 5 und 6: eine Seiten- und Perspektivansicht der Durchladeein- richtung in Betriebsstellung, und
- Fig. 7: eine perspektivische Ansicht einer Durchladeeinrich- tung in einer alternativen Ausführungsform schräg von hinten.

Wie aus den Zeichnungen hervorgeht, ist die als Ganzes mit 1 bezeichnete Durchladeeinrichtung beispielsweise für den Einbau in den Laderaumboden 2 eines Kombi-Pkw bestimmt. Dazu ist die Durchladeeinrichtung 1 als Modul ausgelegt, das auf einer Bodenwanne 3 aufgebaut ist, die in den Laderaumboden 2 einzubauen ist.

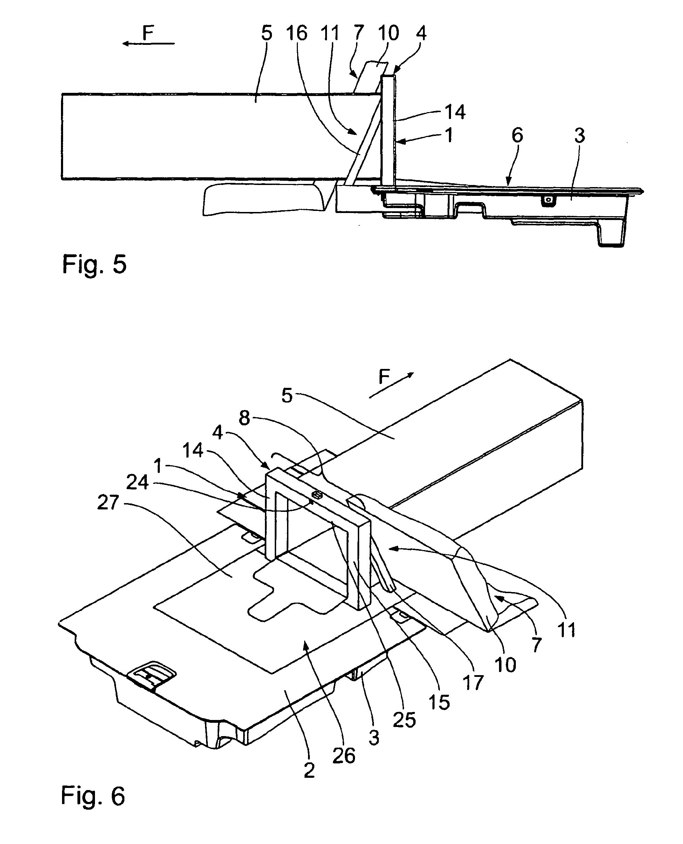

Grundsätzlich weist die Durchladeeinrichtung 1 einen im Wesentlichen rechteckigen Durchladerahmen 4 auf, an den - wie aus den Fig. 5 und 6 deutlich wird - ein sogenannter Skisack 5 mit seiner Öffnung angekoppelt ist. Die Ankopplung kann über einen nicht näher dargestellten Halterahmen am Skisack 5 vorgenommen werden, der in den Durchladerahmen 4 lösbar eingerastet werden kann. Damit ist der Skisack 5 auch abnehmbar.

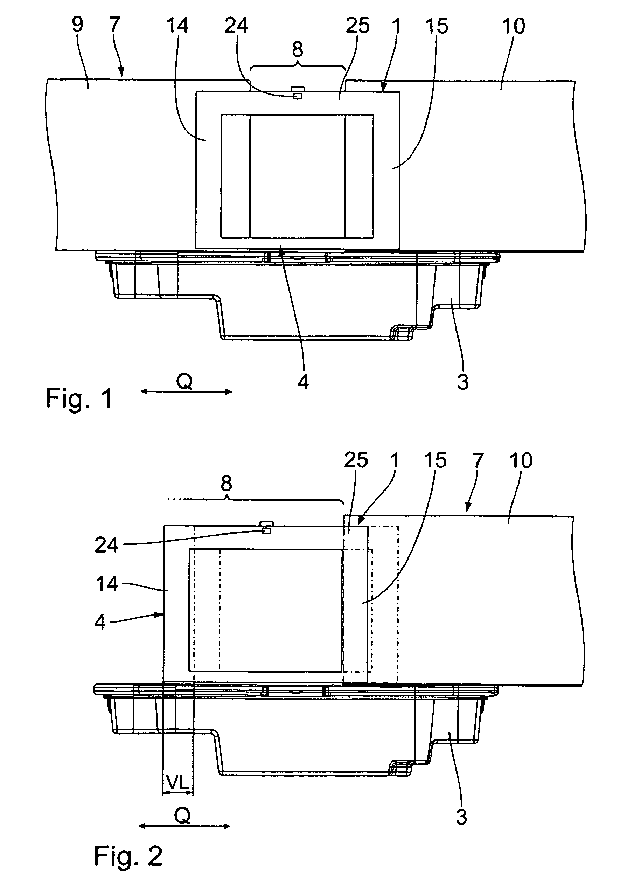

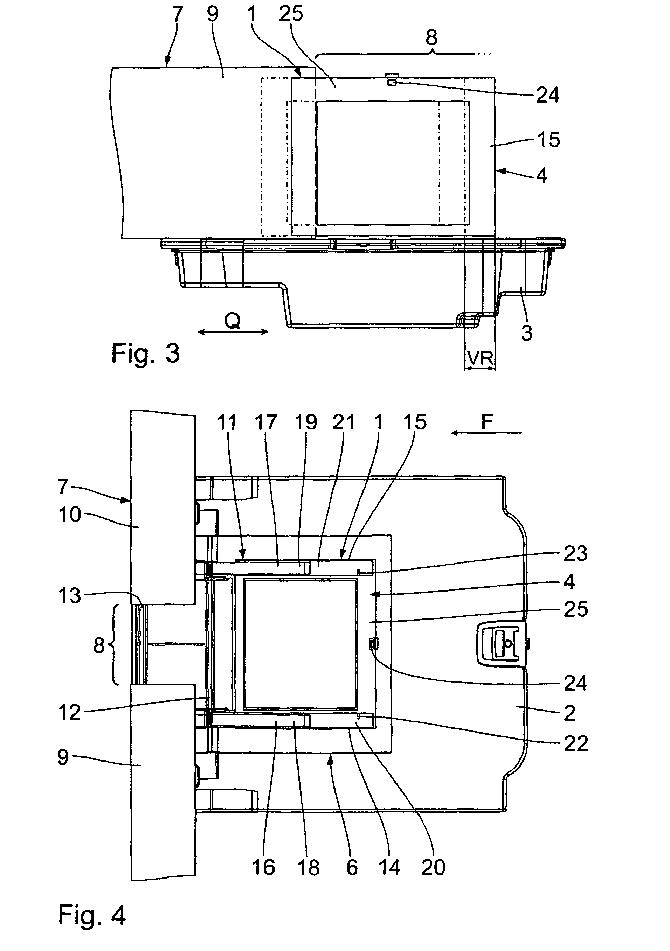

Der Durchladerahmen 4 ist durch eine noch näher zu erläuternde Aufstellmechanik 11 (siehe Fig. 4 bis 6) zwischen einer Ruhestellung, in der er in einem von der Bodenwanne 3 gebildeten Fach 6 im Laderaumboden 2 eingeklappt verwahrt ist (siehe Fig. 4), und einer hochgestellten Betriebsstellung verschwenkbar, in der der Durchladerahmen 4 im Wesentlichen aufrecht mit seiner Rahmenebene angeordnet ist. Vor dem Durchladerahmen 4 ist im Bereich einer in der Breite mehrfach geteilten Rücksitzlehne 7 ein Durchlass 8 zu bilden, im Falle der Fig. 1 bis 3 beispielsweise durch das schmale, zentrale Mittelarmlehnenteil der Rücksitzlehne 7. Beiderseits des Durchlasses 8 stehen die beiden linken und rechten Lehnenteile 9, 10 aufrecht, so dass zwei Personen auf der Rücksitzbank Platz nehmen können. Wie in Fig. 1 dargestellt ist, wird bei dieser Lehnenkonfiguration der Durchladerahmen 4 mittig positioniert, so dass - allenfalls seitlich durch die Rückenlehnenteile 9, 10 eingeschnürt - der gesamte Durchlass 8 für das Durchstecken von beispielsweise Skiern zur Verfügung steht.

Wird nun - wie in Fig. 2 dargestellt ist - zusätzlich noch das linke Lehnenteil nach unten geklappt, würde bei unveränderter Position des Durchladerahmens 4 der innere Rand des rechten Lehnenteils 10 den freien Querschnitt des Durchladerahmens 4 einengen. Um dies zu vermeiden, ist der Durchladerahmen 4 in Querrichtung Q verschiebbar gelagert. Insoweit kann er um die Verschiebestrecke VL nach links verschoben werden, so dass die gesamte Breite des Durchladerahmens 4 im Durchlass 8, wie er durch die umgeklappten Rücksitzlehnenteile gebildet wird, zu liegen kommt. Damit steht die volle Durchladequerschnittsfläche zur Verfügung.

Wie aus Fig. 3 deutlich wird, kann der Durchladerahmen 4 auch in Gegenrichtung um die Verschiebestrecke VR gegenüber der zentralen Mittelstellung gemäß Fig. 1 verschoben werden, so dass bei einer spiegelverkehrten Lehnenkonfiguration mit dem rechten Lehnenteil 10 in heruntergeklappter Stellung genau so der Durchladerahmen 4 so gestellt werden kann, dass seine volle Durchladefläche vor dem so gebildeten, breiten Durchlass 8 zu liegen kommt.

Wie aus den Fig. 4 bis 6 deutlich wird, ist der Durchladerahmen 4 mit einer als Ganzes mit 11 bezeichneten Aufstellmechanik definiert zwischen seiner Ruhestellung (Fig. 4) in seine Betriebsstellung (Fig. 5 und 6) verstellbar. Grundsätzlich ist der Durchladerahmen 4 dabei schwenkbar um eine im Bereich des Fachs 6 angeordnete, in Querrichtung bezogen auf die Fahrtrichtung F liegende Schwenkachse 12 schwenkbar gelagert. Um eine in Fahrtrichtung davor angeordnete, zweite Schwenkachse 13 sind zwei auf Höhe der linken und rechten Vertikalstrebe 14, 15 des Durchladerahmens verlaufende Führungsarme 16, 17 angelenkt, die mit ihren freien Enden 18, 19 in einer Gleitführung 20, 21 in der jeweiligen Vertikalstrebe 14, 15 laufen. Am oberen Ende dieser Gleitführungen 20, 21 ist jeweils eine Verrastung 22, 23 für die freien Enden 18, 19 der Führungsarme 16, 17 vorgesehen, die durch einen gemeinsamen Betätigungsknopf 24 mittig auf der oberen Horizontalstrebe 25 des Durchladerahmens 4 ver- und entriegelbar ist. Mit Hilfe dieses Betätigungsknopfes 24 kann auch eine Verriegelung des Durchladerahmens 4 in seiner Ruhestellung im Fach 6 aufgehoben werden, wenn die Durchladeeinrichtung 1 in ihre Betriebsstellung übergeführt werden soll. In diesem Falle muss lediglich eine falt- oder teilbare Abdeckung 26 (angedeutet in Fig. 6) vom Fach 6 abgehoben und die Festlegung der Durchladeeinrichtung 1 im Fach aufgehoben werden. In der Aufstellmechanik 11 sind Gasdruckfedern (nicht dargestellt) integriert, die dann ein Hochschwenken des Durchladerahmens 4 unter Mithilfe der Führungsarme 16, 17 hervorrufen. Durchladerahmen 4 und Führungsarme 16, 17 vollführen eine Schwenkung nach oben, wobei die Führungsarme 16, 17 mit ihren freien Enden 18, 19 in der Gleitführung 20, 21 entlanglaufen, bis sie in der Verrastung 22, 23 festgelegt werden. Damit ist der Durchladerahmen 4 in seiner aufrechten Betriebsstellung (Fig. 5 und 6) festgelegt und durch die Führungsarme 16, 17 abgestützt. Sofern der Skisack 5 mit am Durchladerahmen 4 befestigt im Fach 6 untergebracht war, braucht dieser lediglich durch den entsprechenden Durchlass 8 im Bereich der Lehnenteile 9, 10 der Rücksitzbank nach vorne aufgefaltet werden. Ist er gesondert von der Durchladeeinrichtung 1 aufbewahrt, so genügt es, den Skisack 5 am Durchladerahmen 4 anzubringen und entsprechend in Aufnahmeposition für beispielsweise Skier zu bringen.

Soll die Durchladeeinrichtung 1 aus der in Fig. 1 und 4 gezeigten Zentralposition verschoben werden, so sind die Schwenkachsen 12, 13 gleichzeitig als Gleitführung für die gesamte Aufstellmechanik 11 mit dem Durchladerahmen 4 ausgelegt, so dass diese Bauteile quer zur Fahrtrichtung F nach links oder rechts als Baueinheit verschoben werden können. In den jeweiligen Endpositionen und der Mittenposition wird die Aufstellmechanik 11 mit Durchladerahmen 4 mithilfe von Kugelrastern (nicht dargestellt) festgelegt.

In der Betriebsstellung (Fig. 5 und 6) wird im Übrigen das Fach 6 im Bereich des leeren, nicht von der Durchladeeinrichtung 1 belegten Abschnittes durch ein Plattenteil 27 oder falt- bzw. teilbare Abdeckung 26 abgedeckt, so dass in diesem Bereich der Laderaumboden voll nutzbar bleibt.

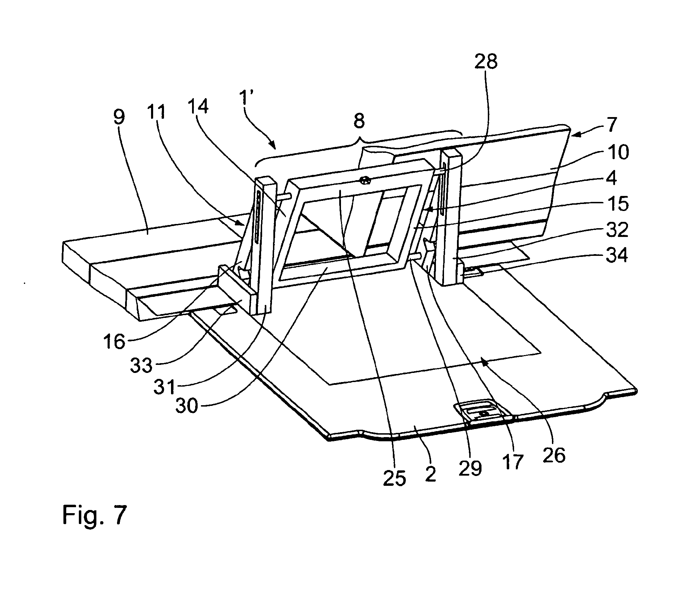

Fig. 7 zeigt eine alternative Ausführungsform der Durchladeeinrichtung 1'. Hierbei ist der Durchladerahmen 4 an zwei Quertraversen 28, 29 in Querrichtung verschiebbar, die den Durchladerahmen 4 im Bereich dessen oberer und unterer Horizontalstrebe 25, 30 durchsetzen. Zur Lagerung der beiden Quertraversen 28, 29 ist jeweils ein schwenkbarer Stützarm 31, 32 vorgesehen, der analog der Ausführungsform gemäß den Fig. 1 bis 6 mit Führungsarmen 16, 17 zusammenarbeitet. Dementsprechend sind die Führungsarme 16, 17 jeweils in (nicht erkennbaren) Gleitführungen in den Stützarmen 31, 32 geführt und bei Erreichen der in Fig. 7 gezeigten Betriebsstellung verrastbar. Schließlich ist in Fig. 7 das großflächige, teil-, klapp- oder faltbare Plattenteil 27 dargestellt, das bis auf die Eckbereiche, in denen jeweils Stützarme 31, 32 und Führungsarme 16, 17 angeordnet sind, das unter dem Laderaumboden 2 liegenden Fach für die Durchladeeinrichtung 1' abdeckt. In diesen Eckbereichen sind zwei klappbare, über (nicht dargestellte) Scharniere angelenkte Verschlusstücke 33, 34 vorgesehen, die die beim Vollführen der Durchladeeinrichtung 1' in die Ruhestellung entstehende Lücke bei den Stützarmen 31, 32 und Führungsarmen 16, 17 verschließt, so dass sich zusammen mit dem Plattenteil 27 eine durchgehende ebene Fläche des Laderaumbodens 2 ergibt.

## Patentansprüche

1. Durchladeeinrichtung für Kraftfahrzeugsitze, insbesondere für Kfz-Rücksitzlehnen (7), umfassend
- einen hinter einem Durchlass (8) im Bereich der Sitzlehne (7) positionierbaren Durchladerahmen (4), der zwischen einer in einem Fach (6) im Innenraumboden, insbesondere Laderaumboden (2) des Kfz verwahrten Ruhestellung und einer vor den Durchlass (8) hochgeschwenkten Betriebsstellung verstellbar ist,
**dadurch gekennzeichnet, dass**
- der Durchladerahmen (4) zumindest in der Betriebsstellung in Querrichtung (Q) verschiebbar gelagert ist.

2. Durchladeeinrichtung nach Anspruch 1, **dadurch gekennzeichnet, dass** der Durchladerahmen (4) als Halter für eine flexible Schutzhülle (5), insbesondere einen Skisack ausgebildet ist.

3. Durchladeeinrichtung nach Anspruch 1 oder 2, **dadurch gekennzeichnet, dass** der Durchladerahmen (4) an einer Aufstellmechanik (11) mit einer im Fach (6) im Innenraumboden (2) liegenden Schwenkachse (12) verschwenkbar gelagert ist, wobei die Aufstellmechanik (11) mit seitlichen Führungsarmen (16, 17) den Durchladerahmen (4) beim Aufstellvorgang führt und in der Betriebsstellung fixiert.

4. Durchladeeinrichtung nach Anspruch 3, **dadurch gekennzeichnet, dass** der Durchladerahmen (4) auf der Schwenkachse (12) auch in Querrichtung (Q) verschiebbar gelagert ist.

5. Durchladeeinrichtung nach einem der Ansprüche 1 bis 3, **dadurch gekennzeichnet, dass** der Durchladerahmen (4) an zumindest einer die Führungsarme (16, 17) der Aufstellmechanik (11) an ihren oberen Enden (18, 19) verbindenden Traverse (28) querverschiebbar gelagert ist.

6. Durchladeeinrichtung nach einem der vorgenannten Ansprüche, **dadurch gekennzeichnet, dass** der Durchladerahmen (4) etwa um die Hälfte seiner Breite (B) querverschiebbar ist.

7. Durchladeeinrichtung nach einem der vorgenannten Ansprüche, **dadurch gekennzeichnet, dass** sie in ihrer im Fach (6) verwahrten Ruhestellung von einer vorzugsweise falt- oder teilbaren LaderaumAbdeckung (26) abgedeckt ist.

8. Durchladeeinrichtung nach Anspruch 7, **dadurch gekennzeichnet, dass** die Abdeckung (26) mit einem Plattenteil (27) den leeren, in ihrer Betriebsstellung nicht von der Durchladeeinrichtung (1, 1') belegten Abschnitt des Fachs (6) abdeckt.

9. Durchladeeinrichtung mindestens nach Anspruch 3, **dadurch gekennzeichnet, dass** der Durchladerahmen (4) mit Aufstellmechanik (11) nach einer Entarretierung aus ihrer Ruhestellung selbsttätig in ihre Betriebsstellung überführbar ist.

10. Durchladeeinrichtung mindestens nach Anspruch 2, **dadurch gekennzeichnet, dass** in der Ruhestellung die Schutzhülle (5) zusammen mit der verbleibenden Durchladeeinrichtung (1, 1') im Fach verwahrt ist.

## Claims

1. Load-through device for motor vehicle seats, in particular for automobile rear seatbacks (7), the load-through device comprising
- a load-through frame (4) which is positionable behind a passage (8) in the region of the seatback (7) and is movable between a rest position stored in a compartment (6) in the interior floor, in particular loading space floor (2) of the automobile, and an operating position pivoted upward in front of the passage (8),
**characterized in that**
- the load-through frame (4) is mounted in such a way as to be displaceable in a transverse direction (Q) at least in the operating position.

2. Load-through device according to claim 1, **characterized in that** the load-through frame (4) is configured as a holder for a flexible protection sleeve (5), in particular a ski bag.

3. Load-through device according to claim 1 or 2, **characterized in that** the load-through frame (4) is displaceably mounted to a lifting mechanism (11) having a pivot axis (12) which lies in the compartment (6) in the interior floor (2), wherein the lifting mechanism (11) guides the load-through frame (4) by means of lateral guide arms (16, 17) during the lifting procedure and holds it in place in the operating position.

4. Load-through device according to claim 3, **characterized in that** the load-through frame (4) is also mounted to the pivot axis (12) in such a way as to be displaceable in the transverse direction (Q).

5. Load-through device according to one of claims 1 to 3, **characterized in that** the load-through frame (4) is mounted to at least one crossbar (28) in such a way as to be transversely displaceable, the crossbar (28) interconnecting the upper ends of the guide arms (16, 17) of the lifting mechanism (11).

6. Load-through device according to one of the preceding claims, **characterized in that** the load-through frame (4) is transversely displaceable approximately by half its width (B).

7. Load-through device according to one of the preceding claims, **characterized in that** it is covered by a preferably foldable or dividable loading space cover (26) when in its rest position stored in the compartment (6).

8. Load-through device according to claim 7, **characterized in that** one plate member (27) of the cover (26) covers the empty portion of the compartment (6) which is not occupied by the load-through device (1, 1') when in its operating position.

9. Load-through device at least according to claim 3, **characterized in that** after unlocking, the load-through frame (4) is automatically movable from its rest position into its operating position by means of the lifting mechanism (11).

10. Load-through device at least according to claim 2, **characterized in that** in the rest position, the protection sleeve (5) is stored in the compartment together with the remaining load-through device (1, 1').

## Revendications

1. Dispositif à évidement de chargement pour sièges de véhicules automobiles (7), en particulier pour dossiers de sièges arrières (7) de véhicules automobiles, comprenant :
- un cadre à évidement de chargement (4), pouvant être positionné derrière un passage (8) dans la région du dossier de siège (7), et qui est réglable entre une position de repos aménagée dans un compartiment (6) dans le plancher de l'habitacle, en particulier le fond (2) de l'espace de chargement du véhicule, et une position de service pivotée vers le haut devant le passage (8),
**caractérisé en ce que**
- le cadre à évidement de chargement est monté à coulissement dans la direction transversale (Q) au moins dans la position de service.

2. Dispositif à évidement de chargement selon la revendication 1, **caractérisé en ce que** le cadre à évidement de chargement (4) est conçu sous forme de support pour une housse de protection (5) flexible, en particulier un sac à skis.

3. Dispositif à évidement de chargement selon la revendication 1 ou 2, **caractérisé en ce que** le cadre à évidement de chargement (4) est monté à pivotement sur un mécanisme de redressement (11) doté d'un pivot (12) situé dans le compartiment (6), ménagé dans le plancher (2) de l'habitacle, le mécanisme de redressement (11), doté de bras de guidage latéraux (16, 17), guidant le cadre à évidement de chargement(4) lors du processus de redressement et l'immobilisant dans la position de service.

4. Dispositif à évidement de chargement selon la revendication 3, **caractérisé en ce que** le cadre à évidement de chargement (4) est monté à coulissement sur le pivot (12) également dans la direction transversale (Q).

5. Dispositif à évidement de chargement selon l'une des revendications 1 à 3, **caractérisé en ce que** le cadre à évidement de chargement (4) est déplaçable transversalement sur au moins une traverse (28) reliant les bras de guidage (16, 17) du mécanisme de redressement (11) à leurs extrémités supérieures (18, 19).

6. Dispositif à évidement de chargement selon l'une des revendications précédentes, **caractérisé en ce que** le cadre à évidement de chargement (4) est déplaçable transversalement de sensiblement la moitié de sa largeur (B).

7. Dispositif à évidement de chargement selon l'une des revendications précédentes, **caractérisé en ce qu'**il est recouvert, dans sa position de repos aménagée dans le compartiment (6), d'un recouvrement (26) de l'espace de chargement, de préférence pliable ou divisable.

8. Dispositif à évidement de chargement selon la revendication 7, **caractérisé en ce que** le recouvrement (26) recouvre, au moyen d'un élément de plaque (27), la partie vide du compartiment (6) qui, dans sa position de service, n'est pas occupée par le dispositif à évidement de chargement (1, 1').

9. Dispositif à évidement de chargement au moins selon la revendication 3, **caractérisé en ce que** le cadre à évidement de chargement (4) peut, au moyen du mécanisme de redressement (11), passer automatiquement, après un déverrouillage, de sa position de repos à sa position de service.

10. Dispositif à évidement de chargement selon au moins la revendication 2, **caractérisé en ce que**, dans la position de repos, la housse de protection (5) avec le dispositif à évidement de chargement restant (1, 1') est rangée dans le compartiment.
